# EUROPÄISCHE PATENTSCHRIFT

(11) **EP 4 166 799 B1**
(45) Veröffentlichungstag und Bekanntmachung des Hinweises auf die Patenterteilung: **28.08.2024**
(21) Anmeldenummer: 22197064.3
(22) Anmeldetag: 22.09.2022
(51) Int. Cl.: F16B 25/00, F16B 13/14

(54) **VERSTÄRKUNGSELEMENT ZUM VERSTÄRKEN EINES WERKSTOFFS SOWIE EINE ANORDNUNG MIT EINEM DERARTIGEN VERSTÄRKUNGSELEMENT IN DEM WERKSTOFF**
REINFORCING ELEMENT FOR REINFORCING A MATERIAL AND AN ARRANGEMENT WITH SUCH A REINFORCING ELEMENT IN THE MATERIAL
ÉLÉMENT DE RENFORCEMENT DESTINÉ AU RENFORCEMENT D'UN MATÉRIAU ET AGENCEMENT DOTÉ D'UN TEL ÉLÉMENT DE RENFORCEMENT DANS LE MATÉRIAU

(30) Priorität: 15.10.2021 DE 102021211696
(43) Veröffentlichungstag der Anmeldung: 19.04.2023
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A1- 2 902 645
- DE-A1- 102011 006 455
- DE-A1- 102014 222 891
- DE-U1- 20 005 166
- US-A- 5 531 553
- US-A1- 2005 129 484
- US-A1- 2007 147 973

## Beschreibung

Die Erfindung betrifft ein Verstärkungselement zum Verstärken eines Werkstoffs sowie eine Anordnung mit einem derartigen Verstärkungselement im Werkstoff.

Aus DE 10 2011 102 825 A1 ist eine Verbindungsanordnung zur Herstellung einer Durchstanzsicherung bekannt.

EP 2 902 645 A1 offenbart eine Schraube zum Einschrauben in ein Bohrloch und eine Vorspann-Anordnung mit einer derartigen in das Bohrloch eingeschraubten Schraube.

DE 10 2014 222 891 A1 offenbart eine selbstschneidende Schraube zum Einschrauben in ein Bohrloch in einem Werkstoff, eine Anordnung mit einer derartigen Schraube und ein Verfahren zum Einschrauben einer derartigen Schraube in ein Bohrloch.

DE 200 05 166 U1 offenbart eine Befestigungs-Einrichtung.

US 5,531,553 offenbart eine Mauerwerkbefestigung.

US 2005/0129484 A1 offenbart eine Verankerungsschraube mit Doppelkopf und Dreifachgewinde verschiedener Gewindetiefen.

US 2007/0147973 A1 offenbart eine Doppelgewindeschraube für Verbundwerkstoffe.

DE 10 2011 006 455 A1 offenbart einen Befestigungsanker sowie eine Befestigungs-Anker-Anordnung mit einem durch einen Schneidkopf gebildeten Hinterschnitt, welcher als Schulter ausgebildet ist.

Der Erfindung liegt die Aufgabe zugrunde, eine Verbindungsanordnung zu verbessern, insbesondere bei großen Verankerungstiefen, und insbesondere die Festigkeit einer derartigen Verbindungsanordnung zu erhöhen und/oder zu verstärken.

Diese Aufgabe wird durch ein Verstärkungselement mit den in Anspruch 1 angegebenen Merkmalen sowie durch eine Anordnung mit den im Anspruch 6 angegebenen Merkmalen gelöst.

Der Kern der Erfindung besteht darin, dass ein Verstärkungselement mit reduziertem Eindrehwiderstand, insbesondere auch bei großen Verankerungstiefen, in einem Bohrloch zu verankern und insbesondere dadurch den Werkstoff, der einen Riss aufweisen kann oder zumindest rissgefährdet ist, zu verstärken. Das Verstärkungselement umfasst einen Kern mit einem ein Schneidgewinde aufweisenden Schneidabschnitt, der unmittelbar in das Bohrloch in dem Werkstoff eingedreht werden kann und darin gehalten ist. Insbesondere ist eine Schneidabschnittlänge des Schneidabschnitts und insbesondere eine Gewindelänge des Schneidgewindes kürzer als eine Gesamtlänge des Verstärkungselements. Das Schneidgewinde ist insbesondere ausschließlich am Schneidabschnitt angeordnet. Insbesondere ist der Kern in einem Bereich außerhalb des Schneidabschnitts schneidgewindefrei ausgeführt. Zudem ist der Schneidgewindedurchmesser des Schneidgewindes nur geringfügig größer als der Innendurchmesser des Bohrlochs. Das Eindrehdrehmoment ist klein. Dadurch ist gewährleistet, dass das Verstärkungselement auch bei großen Einschraubtiefen zuverlässig in das Bohrloch eingedreht werden kann. Beschädigungen und/oder ein Versagen des Verstärkungselements in Folge eines überhöhten Eindrehdrehmoments sind vermieden. In das Bohrloch ist eine aushärtbare Masse eingefüllt, die nach dem Aushärten eine zusätzliche Verankerung des Verstärkungselements in dem Bohrloch bewirkt. Insbesondere wurde erkannt, dass die ausgehärtete Masse eine Festigkeit aufweist, die größer ist als die Festigkeit des umliegenden Werkstoffs. Insbesondere beträgt die Druckfestigkeit der ausgehärteten Masse mindestens 60 N/mm², insbesondere mindestens 65 N/mm², insbesondere mindestens 70 N/mm², insbesondere mindestens 75 N/mm², insbesondere mindestens 80 N/mm², insbesondere mindestens 90 N/mm², insbesondere mindestens 100 N/mm² und insbesondere höchstens 1000 N/mm².

Die ausgehärtete Masse dringt insbesondere in die entlang des Bohrlochs von dem Schneidgewinde in die Innenwand des Bohrlochs eingeschnittene Gewindewendel ein. Die Masse bewirkt einen Formschluss und verhindert ein unbeabsichtigtes Herausziehen des Verstärkungselements aus dem Bohrloch. Die aushärtbare Masse ist eine Verbundmasse.

Dadurch, dass der Schneidabschnitt, der einen Schneidkopf bildet, einen Schneidabschnittsdurchmesser aufweist, der größer ist als ein Kerndurchmesser, weist das Verstärkungselement einen Hinterschnitt auf, der die Verankerung des Verstärkungselements im Bohrlochgrund verbessert. Der Schneidgewindedurchmesser ist insbesondere größer als der Schneidabschnittsdurchmesser.

Eine zusätzlich verbesserte Verankerungswirkung resultiert aus einem konischen Übergangsabschnitt, der sich dem Schneidabschnitt anschließt. Der konische Übergangsabschnitt weist einen Konuswinkel auf, der zwischen 0° und 90° liegt. Insbesondere liegt der Konuswinkel zwischen 30° und 90°, insbesondere zwischen 45° und 90°, insbesondere zwischen 60° und 90° und insbesondere zwischen 75° und 90°. Der Konuswinkel ist insbesondere zwischen einer Normalebene und der geneigten Konusaußenfläche des konischen Übergangsabschnitts definiert. Die Normalebene ist senkrecht zur Längsachse des Kerns orientiert. Es wurde gefunden, dass der Konuswinkel bei einer Axialbelastung des Verstärkungselements aus dem Bohrloch heraus eine Spreizwirkung auf die ausgehärtete Masse ausübt, die die ausgehärtete Masse gegen die Bohrlochinnenwand drückt. Die Spreizwirkung erfolgt insbesondere durch zumindest anteilig radial bezüglich der Längsachse orientierte Spreizkräfte, die von dem konischen Übergangsabschnitt, insbesondere entlang der Umfangsrichtung um die Längsachse, gegen die ausgehärtete Masse und damit gegen die Bohrlochinnenwand wirken. Die Verankerungswirkung ist dadurch zusätzlich erhöht.

Als Werkstoff dient insbesondere ein harter Werkstoff, insbesondere Beton, der insbesondere Stahlarmierungen aufweisen kann. Dadurch, dass der Schneidgewindedurchmesser nur geringfügig größer ist als der Bohrlochdurchmesser, ist das Risiko minimiert, dass das Schneidgewinde mit einer Stahlarmierung kollidiert. Insbesondere kann das Verstärkungselement mit dem Schneidgewinde mit allenfalls geringem Zusatzkraftaufwand, also mit allenfalls nur geringfügig erhöhtem Eindrehdrehmoment an der Stahlarmierung vorbeigedreht werden.

Das Verstärkungselement ist insbesondere ähnlich einer Betonschraube ausgeführt, insbesondere mit dem selbstschneidenden Schneidgewinde, das gegenüber einem Schneidgewinde einer an sich bekannten Betonschraube einen reduzierten Schneidgewindedurchmesser aufweist. Das Verstärkungselement dient insbesondere zum Verstärken des Werkstoffs, also insbesondere zum Vermeiden von Rissbildungen, insbesondere in Folge einer Querbeanspruchung des Werkstoffs. Das Verstärkungselement kann aber auch dazu eingesetzt werden, einen bereits existierenden Riss zu verstärken, indem eine den Riss umklammernde Vorspannung aufgebracht wird. Insbesondere ist der Riss derart ausgeführt, dass der Bohrlochdurchmesser im Wesentlichen unverändert ist und insbesondere ein veränderter Bohrlochdurchmesser immer noch kleiner ist als der Schneidgewindedurchmesser.

Das Verstärkungselement ist insbesondere eine Betonschraube. Das Verstärkungselement ist aus einem metallischen Werkstoff, insbesondere aus einem Stahlwerkstoff hergestellt, der insbesondere galvanisch verzinkt und/oder zinklamellenbeschichtet ist. Insbesondere ist das Verstärkungselement aus einem Werkstoff mit der Bezeichnung 1.4401, 1.4404, 1.4571, 1.4578 und/oder 1.4529 hergestellt. Es sind auch andere metallische, insbesondere Stahlwerkstoffe, möglich.

Es wurde gefunden, dass das Verstärkungselement, insbesondere der Schneidkopf, beim Eindrehen des Verstärkungselements in das Bohrloch, in das bereits die aushärtbare Masse gefüllt ist, wie ein Hydraulik-Zylinder wirkt, der die aushärtbare Masse in die bereits vorhandenen Risse verpresst. Dadurch ist es möglich, den das Bohrloch umgebenden Werkstoff mittels der aushärtbaren Masse zu sanieren und insbesondere zu verstärken. Die Risse werden mit der Masse verpresst und damit die Umgebung des Bohrlochs stabilisiert.

Das Schneidgewinde ist insbesondere einteilig an dem Schneidabschnitt angeordnet und insbesondere einteilig an dem Kern angeformt. Die Gewindelänge des Schneidgewindes beträgt insbesondere maximal die Länge des Schneidkopfes. Insbesondere kann die Gewindelänge auch kleiner sein als die Schneidabschnittslänge, insbesondere höchstens 95%, insbesondere höchstens 90%, insbesondere höchstens 85%, insbesondere höchstens 80%, insbesondere höchstens 75% und insbesondere mindestens 50%.

Um das Verstärkungselement in das Bohrloch einzuschrauben, wird das hierfür erforderliche Eindrehdrehmoment von einem Werkzeug wie beispielsweise einer Handratsche oder eines Tangential-Schlagschraubers auf das Verstärkungselement übertragen. Hierzu dient ein Drehmomentübertragungselement, das insbesondere einteilig an dem Kern angeformt ist. Das Drehmomentübertragungselement weist eine unrunde Kontur in einer Ebene senkrecht zur Längsachse auf. Insbesondere weist der Drehmomentübertragungsabschnitt eine unrunde Außenkontur auf, insbesondere eine Außen-Sechskantkontur.

Das Verstärkungselement eignet sich insbesondere für große Einschraubtiefen, die insbesondere mindestens 0,5m, insbesondere 0,7m, insbesondere mindestens 0,9m und insbesondere mindestens 1,0m betragen. Die Einschraubtiefe beträgt höchstens 2,0m.

Das Verstärkungselement weist ein Befestigungsgewinde auf, das in einem Befestigungsabschnitt angeordnet ist, und ermöglicht eine flexible und insbesondere verbesserte Verstärkung des Werkstoffs, insbesondere das unmittelbare Aufbringen einer Vorspannung, insbesondere einer Druck-Vorspannung. Das Befestigungsgewinde ist insbesondere ein metrisches Befestigungsgewinde, insbesondere ein metrisches Befestigungsaußengewinde.

Ein Verstärkungselement gemäß Anspruch 2 weist einen reduzierten Eindrehwiderstand auf. Das Eindrehen des Verstärkungselements ist insbesondere auch für große Einschraubtiefen problemlos möglich.

Dadurch, dass der Schneidabschnitt höchstens die Hälfte der Gesamtlänge des Verstärkungselements beträgt, ist gewährleistet, dass der Eingriff des Schneidgewindes an der Bohrlochinnenwand minimiert ist. Es wurde aber auch gefunden, dass die Schneidabschnittslänge ausreichend ist, um eine zumindest anfängliche Verankerung des Verstärkungselements im Bohrloch zu gewährleisten, insbesondere so lange die Masse noch nicht ausgehärtet ist. Insbesondere beträgt die Gewindelänge des Schneidgewindes höchstens 50% der Gesamtlänge, insbesondere höchstens 30%, insbesondere höchstens 15%, insbesondere höchstens 10%, insbesondere höchstens 5% und insbesondere mindestens 1%. Die Gewindelänge beträgt insbesondere höchstens 100mm, insbesondere höchstens 90mm, insbesondere höchstens 80mm, insbesondere höchstens 75mm, insbesondere höchstens 70mm, insbesondere höchstens 50mm und insbesondere mindestens 10mm.

Ein Verstärkungselement gemäß Anspruch 3 ist unkompliziert ausgeführt und einfach in der Handhabung.

Ein Verstärkungselement gemäß Anspruch 4 verbessert die Lasteinleitung von dem Verstärkungselement in den Werkstoff. Als Lastverteilelement dient insbesondere eine Scheibe, die insbesondere ringzylindrisch ausgeführt ist. Das Lastverteilelement weist insbesondere eine Durchgangsöffnung auf, mit der das Lastverteilelement über das bereits im Bohrloch angeordnete Verstärkungselement aufgesetzt, an einer Oberseite des Werkstoffs abgestützt und mittels des Befestigungselements vorgespannt werden kann. Die Innenkontur der Durchgangsöfffnung des Lastverteilelements kann beliebig festgelegt werden, wobei eine lichte Weite der Durchgangsöffnung größer ist als ein Außendurchmesser des Befestigungsgewindes.

Die Außenkontur des Lastverteilelements kann im Wesentlichen beliebig gewählt werden und kann insbesondere auch unrund und insbesondere polygonal ausgeführt sein.

Ein Verstärkungselement gemäß Anspruch 5 ermöglicht eine unkomplizierte Ausgestaltung des Verstärkungselements. Insbesondere bei einem Verstärkungselement mit großer Gesamtlänge ermöglicht ein Schaftabschnitt eine kostensparende Ausführung. Der Schaftabschnitt ist insbesondere gewindefrei ausgeführt.

Eine Anordnung gemäß Anspruch 6 weist im Wesentlichen die Vorteile des Verstärkungselements auf, worauf hiermit verwiesen wird. Wesentlich ist, dass der Schneidgewindedurchmesser größer ist als der Bohrlochdurchmesser, insbesondere aber nur geringfügig größer. Die in dem Bohrloch angeordnete aushärtbare Masse ist insbesondere eine Verbundmasse, die insbesondere in das Bohrloch eingebracht wird, bevor das Verstärkungselement in das Bohrloch eingeschraubt wird. Die Füllmenge der aushärtbaren Masse in dem Bohrloch ist insbesondere derart festgelegt, dass die beim Eindrehen des Verstärkungselements noch flüssige, nicht ausgehärtete Masse aus dem Bohrloch an der Oberfläche des Werkstoffs austritt. Die Verstärkungswirkung der später ausgehärteten Masse ist dadurch verbessert. Zudem ist das Bohrloch und insbesondere das in dem Bohrloch angeordnete Verstärkungselement mittels der ausgehärteten Masse abgedichtet und vor Korrosion geschützt.

Eine Anordnung gemäß Anspruch 7 oder 8 weist verbesserte Einschraubbedingungen auf, insbesondere mit reduziertem Eindrehdrehmoment. Dadurch, dass der Schneidgewindedurchmesser besonders klein gewählt worden ist, ist sichergestellt, dass das Verstärkungselement auch bei großen Einschraubtiefen zuverlässig in das Bohrloch eingedreht werden kann. Insbesondere ist der Schneidgewindedurchmesser höchstens 1,5mm größer als der Bohrlochdurchmesser, insbesondere höchstens 1,2mm, insbesondere höchstens 1,0mm und insbesondere höchstens 0,8mm. Insbesondere ist der Kerndurchmesser kleiner als der Bohrlochdurchmesser. Insbesondere ist der Außendurchmesser des Befestigungsgewindes kleiner als der Bohrlochdurchmesser.

Eine Anordnung gemäß Anspruch 9 nutzt die Erkenntnis, dass eine bezogen auf die Bohrlochtiefe reduzierte Schneidkopflänge und insbesondere eine bezogen auf die Bohrlochtiefe reduzierte Gewindelänge zu einem verminderten Einschraubdrehmoment führen.

Eine Anordnung gemäß Anspruch 10 weist eine vorteilhafte Keilwirkung im verankerten Zustand auf, die zu einer erhöhten Gesamtfestigkeit der Verankerung führt. Wegen der mechanischen Abnutzung des Schneidgewindes während des Eindrehvorgangs und insbesondere bei großen Bohrlochtiefen, wird der Außendurchmesser der mit dem Schneidgewinde eingeschnittenen Gewindewendel in Einschraubrichtung reduziert. Es resultiert eine sich in Einschraubrichtung, insbesondere konisch, verjüngende Hüllkurve der Gewindewendel. Dadurch ist der Hinterschnitt der ausgehärteten Masse in dem Bohrloch und insbesondere in der Gewindewendel verstärkt.

Eine Anordnung gemäß Anspruch 11 ermöglicht eine unmittelbare und unkomplizierte Verstärkung des Werkstoffs, insbesondere durch eine axiale Vorspannung entlang der Längsachse. An dem Befestigungsabschnitt, der insbesondere an der Oberfläche des Werkstoffs vorsteht, kann das Befestigungselement und optional das Lastverteilelement angebracht und mit Vorspannung an dem Werkstoff angeordnet werden.

Weitere Merkmale, Vorteile und Einzelheiten ergeben sich aus der nachfolgenden Beschreibung eines Ausführungsbeispiels anhand der Zeichnung. Es zeigen:
- Fig. 1: eine Längsschnittdarstellung eines in einem Werkstoff angeordneten Verstärkungselement,
- Fig. 2: eine vergrößerte Detaildarstellung des Details II in Fig. 1.

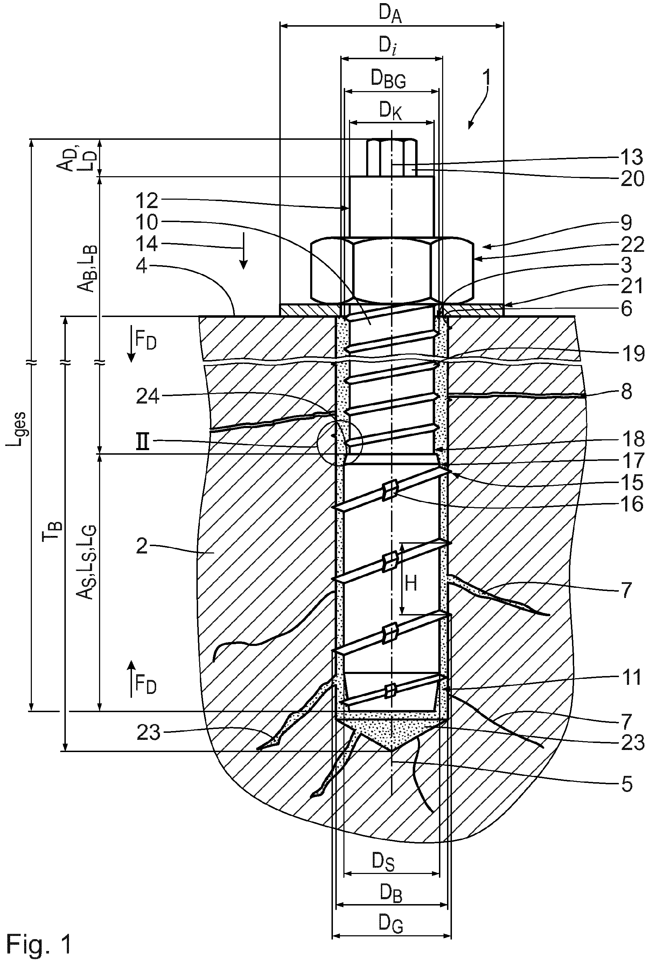

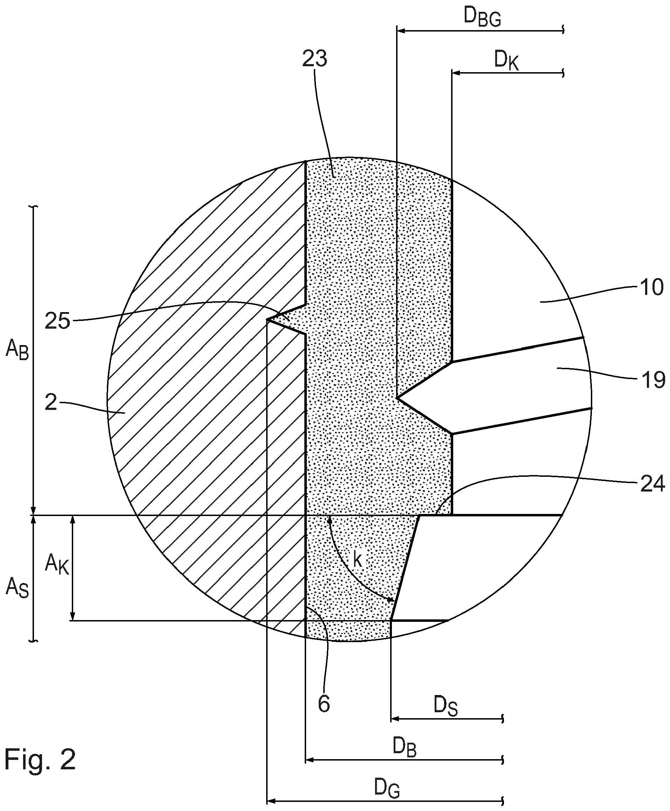

Im Folgenden wird unter Bezugnahme auf Fig. 1 und 2 eine Anordnung beschrieben, die als Ganzes mit 1 gekennzeichnet ist. Die Anordnung 1 umfasst Beton als Werkstoff 2, in dem ein zylindrisches Bohrloch 3 in Form einer Sacklochbohrung angeordnet ist. Das Bohrloch 3 weist eine Bohrlochtiefe T_{B} und einen Bohrlochdurchmesser D_{B} auf. Das Bohrloch 3 kann als Tiefenbohrung ausgeführt sein und als Bohrlochtiefe T_{B} mindestens 0,5m oder mehr betragen.

Das Bohrloch 3 erstreckt sich von einer äußeren Oberfläche 4 des Werkstoffs 2 entlang einer Bohrloch-Längsachse 5.

Das Bohrloch 3 weist eine Bohrloch-Innenwand 6 auf, die zylindermantelförmig ausgeführt ist. In Folge der Bohrloch-Herstellung, also in Folge des Bohrvorgangs, können in dem Werkstoff 2 Risse 7 entstehen, die sich ausgehend von der Bohrloch-Innenwand 6 in den Werkstoff 2 erstrecken.

Zusätzlich oder alternativ kann in dem Werkstoff 2 ein Querriss 8 angeordnet sein, der insbesondere quer zum Bohrloch 3, insbesondere quer und insbesondere unter einem 45°-Winkel zur Bohrloch-Längsachse 5 verläuft. Es können auch mehrere Querrisse 8 vorhanden sein. Der Querriss 8 ist insbesondere oberflächennah, also benachbart zu der Oberseite 4, in dem Werkstoff 2 angeordnet. Insbesondere verläuft der Querriss 8 in einem Bereich des Bohrlochs 3, also in einem Bereich des Werkstoffs 2 ausgehend von der Oberseite 4 bis zur Bohrlochtiefe T_{B}. Insbesondere wird die Bohrlochtiefe T_{B} des Bohrlochs 3 so gewählt, dass sie größer ist als die Vertikalerstreckung des Querrisses 8, also in einer Richtung senkrecht zur Oberseite 4.

Der Querriss 8 kann zumindest teilweise auch außerhalb der Bohrlochtiefe T_{B}, also in tieferliegenden Schichten des Werkstoffs 2, verlaufen. Der Querriss 8 erstreckt sich entlang einer Querrichtung. Diese Querrichtung ist insbesondere nicht linear. Die Querrichtung kann sich beispielsweise im Wesentlichen in einem Winkel von etwa 45° gegenüber der Bohrloch-Längsachse 5 erstrecken. Entlang der Querrichtung weist der Querriss 8 eine Rissbreite auf, die unterschiedlich stark ausgeführt sein kann.

Der Querriss 8 kann das Bohrloch 3 schneiden oder in einer zum Bohrloch 3 versetzten Ebene verlaufen, also beabstandet zu dem Bohrloch 3 im Werkstoff 2 angeordnet sein.

In dem Bohrloch 3 ist ein Verstärkungselement 9 angeordnet. Das Verstärkungselement 9 ist insbesondere ein Verankerungselement und insbesondere ein Befestigungsanker, insbesondere eine Betonschraube. Das Verstärkungselement 9 dient zum Verstärken des Werkstoffs 2, insbesondere zum Vorspannen des Querrisses 8 und/oder zum Vorspannen des Werkstoffs 2, der insbesondere rissfrei ausgeführt sein kann.

Das Verstärkungselement 9 umfasst einen zylindrischen Kern 10 mit einem Einführende 11, einem dem Einführende 11 gegenüberliegenden Außenende 12, einer Längsachse 13 und einer zur Längsachse 13 parallel gerichteten Einschraubrichtung 14. Das Verstärkungselement 9 ist konzentrisch in dem Bohrloch 3 angeordnet. Die Bohrloch-Längssachse 5 und die Längsachse 13 fallen zusammen, liegen also aufeinander. Der Kern 10 weist einen senkrecht zur Längsachse 13 orientierten Kerndurchmesser D_{K} auf.

Der Kern 10 weist einen Schneidabschnitt As auf, entlang dessen sich ein Schneidgewinde 15 zum Einschrauben des Schneidgewindes 15 in den Werkstoff 2 erstreckt. Das Schneidgewinde 15 ist ein Außenschneidgewinde. Das Schneidgewinde 15 ist selbstschneidend ausgeführt.

Der Schneidabschnitt As weist eine entlang der Längsachse 13 orientierte Schneidabschnittlänge L_{S} auf. Bezogen auf eine Gesamtlänge L_{ges} des Verstärkungselements 9 ist die Schneidabschnittmenge Ls klein und beträgt insbesondere höchstens 50%. Vorteilhaft ist es, wenn die Schneidabschnittlänge Ls klein ist bezogen auf die Bohrlochtiefe T_{B} und insbesondere gilt L_{S} ≤ 0,5 × T_{B}.

Der Schneidabschnitt As weist einen senkrecht zur Längsachse 13 orientierten Schneidabschnittdurchmesser Ds auf, der größer ist als der Kerndurchmesser D_{K}. Insbesondere gilt, D_{S} ≥ 1,01 × D_{K}, insbesondere D_{S} ≥ 1,05 × D_{K}, insbesondere D_{S} ≥ 1,1 × D_{K}, insbesondere D_{S} ≥ 1,15 × D_{K}, insbesondere D_{S} ≥ 1,2 × D_{K} und insbesondere D_{S} ≤ 1,5 × D_{K}.

Der Schneidabschnitt As bildet einen Schneidkopf des Verstärkungselements 9.

Gemäß dem gezeigten Ausführungsbeispiel erstreckt sich das Schneidgewinde 15 mit einer Gewindelänge L_{G} entlang der gesamten Schneidabschnittslänge Ls. Es ist auch möglich, dass die Gewindelänge L_{G} kleiner ist als die Schneidabschnittlänge Ls. In diesem Fall weist der Schneidabschnitt As zumindest bereichsweise einen schneidgewindefreien Abschnitt auf, der dem Außenende 12 zugewandt und/oder dem Außenende 12 abgewandt an dem Schneidabschnitt As angeordnet sein kann.

Das Schneidgewinde 15 wird vorzugsweise durch Walzen an dem im Wesentlichen zylindrischen Kern 10 hergestellt.

Das Schneidgewinde 15 hat einen Schneidgewindedurchmesser D_{G}, der größer ist als der Bohrlochdurchmesser D_{B}. Insbesondere ist der Schneidgewindedurchmesser D_{B} geringfügig größer als der Bohrlochdurchmesser D_{B}, insbesondere D_{G} ≤ 1,2 × D_{B}. Insbesondere gilt D_{G} ≤ D_{B} + 1,5mm.

An dem Schneidgewinde 15 können mehrere Schneidelemente 16, insbesondere je Gewindegang ein Schneidelement 16, angeordnet sein, um das Eindrehen des Verstärkungselements 9 in den Werkstoff 2 zu erleichtern.

Die Schneidelemente 16 können auch entfallen. Als Gewindegang wird ein voller Umlauf der Schraubenlinie des Schneidgewindes 15 verstanden. Die Axialerstreckung entlang der Längsachse 13 eines Gewindegangs wird als Gewindesteigung H bezeichnet.

Die Schneidelemente 16 sind entlang einer zur Längsachse 13 parallel orientierten Mantellinie angeordnet. Die Schneidelemente 16 können auch in einer anderen Anzahl, d.h. mehrere Schneidelemente 16 je Gewindegang des Schneidgewindes 15, vorgesehen sein. Es ist als Schneidelement 16 kann Schneidmaterial mit hoher Härte und Festigkeit wie beispielsweise Diamant, TiC, TiN und/oder Hartmetall oder Schnellstahl wie beispielsweise Schnellarbeitsstahl oder Hochleistungs-Schnellstahl (HSS) verwendet werden.

Gemäß dem gezeigten Ausführungsbeispiel weist das Schneidgewinde 15 vier Gewindegänge auf. Es ist vorteilhaft, wenn mindestens drei Gewindegänge des Schneidgewindes 15 vorgesehen sind, um eine ausreichende Befestigung, also Verankerung des Verstärkungselements 9 in dem Bohrloch 3 zu ermöglichen. Es ist auch möglich, dass das Schneidgewinde 15 fünf oder mehr Gewindegänge aufweist.

Dem Einführende 11 gegenüberliegend ist an dem Schneidabschnitt As eine Ende 17 angeordnet. An das Ende 17 des Schneidabschnitts As schließt sich entlang der Längsachse 13, insbesondere unmittelbar, ein Befestigungsabschnitt A_{B} mit einem Ende 18 an. Das Ende 18 des Befestigungsabschnitts A_{B} ist insbesondere innerhalb des Bohrlochs 3 angeordnet. Insbesondere kann entlang der Längsachse 13 zwischen dem Schneidabschnitt As und dem Befestigungsabschnitt A_{B} ein weiterer Abschnitt, insbesondere ein gewindefreier Schaftabschnitt, angeordnet sein.

Entlang des Befestigungsabschnitts A_{B} erstreckt sich ein einstückig mit dem Kern 10 ausgebildetes Befestigungsgewinde 19, das insbesondere als metrisches Außengewinde ausgeführt ist. Es ist auch möglich, dass das Befestigungsgewinde 19 als Trapezgewinde oder Fractionalgewinde ausgeführt ist. Das Befestigungsgewinde 19 ist zumindest abschnittsweise außerhalb des Bohrlochs 3 angeordnet. Das Verstärkungselement 9 steht an der Oberseite 4 des Werkstoffs 2 über, insbesondere mit dem Befestigungsabschnitt A_{B}.

Das Befestigungsgewinde 19 hat einen Befestigungsgewindedurchmesser D_{BG}, der größer ist als der Kerndurchmesser D_{K}. Der Befestigungsgewindedurchmesser D_{BG} ist kleiner als der Bohrlochdurchmesser D_{B} und ist insbesondere kleiner als der Gewindedurchmesser D_{G} des Schneidgewindes 15. Wesentlich ist, dass das Verstärkungselement 9 im Befestigungsabschnitt As beabstandet zur Bohrloch-Innenwand 6 im Bohrloch 3 angeordnet ist. Dadurch ist das Eindrehen des Verstärkungselements 9 in das Bohrloch 3 vereinfacht, insbesondere der Eindrehwiderstand reduziert.

Der Befestigungsabschnitt A_{B} weist eine entlang der Längsachse 13 orientierte Befestigungsabschnittslänge Ls auf, die insbesondere größer ist als die Schneidabschnittslänge Ls. Es ist insbesondere möglich, dass die Befestigungsabschnittslänge Ls deutlich größer ist als die Schneidabschnittslänge Ls und die Befestigungsabschnittslänge L_{B} im Wesentlichen die Gesamtlänge L_{ges} des Verstärkungselements 9 bestimmt. Insbesondere gilt L_{B} ≥ 0,5 × L_{ges}, insbesondere L_{B} ≥ 0,6 × L_{ges}, insbesondere L_{B} ≥ 0,7 × L_{ges}, insbesondere L_{B} ≥ 0,8 × L_{ges} und insbesondere L_{B} ≤ 0,95 × L_{ges}.

Der Befestigungsabschnitt A_{B} bildet einen Schaftabschnitt, der insbesondere auch zumindest abschnittsweise befestigungsgewindefrei ausgeführt sein kann.

An dem Außenende 12 ist an dem Kern 10 ein Drehmomentübertragungsabschnitt A_{D} angeordnet, der ein Drehmomentübertragungselement 20 aufweist. Das Drehmomentübertragungselement 20 dient zum Übertragen eines Eindrehdrehmoments von einem Eindrehwerkzeug auf den Kern 10, um das Eindrehen des Verstärkungselements 9 in den Werkstoff 2 zu erleichtern. Gemäß dem gezeigten Ausführungsbeispiel ist das Drehmomentübertragungselement 20 als Zapfen mit Außensechskant-Kontur ausgeführt.

Bei dem gezeigten Ausführungsbeispiel erstreckt sich der Drehmomentübertragungsabschnitt A_{D} entlang der Längsachse 13 angrenzend an den Befestigungsabschnitt A_{B}. Entsprechend ergibt sich die Gesamtlänge L_{ges} des Verstärkungselements 9 aus der Summe der Schneidabschnittslänge Ls, der Befestigungsabschnittslänge L_{B} und der Drehmomentübertragungsabschnittslänge L_{D}.

Es ist auch denkbar, dass das Drehmomentübertragungselement 20 als Vertiefung an dem Befestigungsabschnitt A_{B} mit einer unrunden Innenkontur ausgeführt ist. In diesem Fall ergibt sich die Gesamtlänge L_{ges} des Verstärkungselements 9 aus der Summe der Schneidabschnittslänge Ls und der Befestigungsabschnittslänge L_{B}.

Auf das Verstärkungselement 9 ist ein Lastverteilelement 21 in Form einer Ringscheibe aufgesetzt. Das Lastverteilelement 21 liegt stirnseitig an der Oberseite 4 des Werkstoffs 2 auf. Das Lastverteilelement 21 weist einen Außendurchmesser D_{A} und einen Innendurchmesser Dᵢ auf. Der Innendurchmesser Dᵢ ist größer als der Befestigungsgewindedurchmesser D_{BG}. Das Lastverteilelement 21 kann kollisionsfrei über das im Bohrloch 3 verankerte Verstärkungselement 9 aufgesetzt werden.

Auf das Lastverteilelement 21 ist ein Befestigungselement in Form einer Befestigungsmutter 22 aufgesetzt. Die Befestigungsmutter 22 weist ein, insbesondere metrisches, Innengewinde auf, das mit dem Befestigungsgewinde 19 des Befestigungsabschnitts A_{B} korrespondiert. Die Befestigungsmutter 22 kann, insbesondere mit definiert vorgebaren, Drehmoment an dem Befestigungsgewinde 19 des Verstärkungselements 9 angeschraubt werden. Dadurch wird eine Vorspannkraft über das Lastverteilelement 21 auf den Werkstoff 2 entlang der Eindrehrichtung 14 aufgebracht.

Gemäß dem gezeigten Ausführungsbeispiel ist die Befestigungsmutter 22 mit einer Außen-Sechskantkontur ausgeführt. Die Schlüsselweite der Befestigungsmutter 22 ist kleiner als der Außendurchmesser D_{A} des Lastverteilelements 21. Die von der Befestigungsmutter 22 aufgebrachte Vorspannung wird mittels des Lastverteilelements 21 verteilt in den Werkstoff 2 eingebracht.

In dem Bohrloch 3 ist eine dünnflüssige Verbundmasse 23 angeordnet, die insbesondere in das Bohrloch 3 eingefüllt wird, bevor das Verstärkungselement 9 in das Bohrloch 3 eingeschraubt wird. Die Verbundmasse 23 ist eine aushärtbare Masse, die also beim Einfüllen in das Bohrloch 3 flüssig ist und nach einer Aushärtedauer ausgehärtet ist. Insbesondere weist die aushärtbare Masse 23 eine Festigkeit auf, die insbesondere größer ist als die Festigkeit das Werkstoffs 2. Die Masse 23 ist insbesondere frostbeständig und gewährleistet insbesondere einen Korrosionsschutz für das Verstärkungselement 9. Die aushärtbare Masse 23 dient als Dichtmasse.

Gemäß dem gezeigten Ausführungsbeispiel ist der Schneidkopf von der Masse 23 eingehüllt. Insbesondere ist die Füllmenge der Masse 23 in dem Bohrloch 3 derart festgelegt, dass ein Zwischenraum in dem Bohrloch 3 zwischen dem Verstärkungselement 9 und der Bohrlochinnenwand 6 vollständig mit der Masse 23 gefüllt ist.

Zwischen dem Schneidabschnitt As und dem Befestigungsabschnitt As ist eine Schulter 27 gebildet, die gegen ein Herausziehen des Verstärkungselements 9 entgegen der Einschraubrichtung 14 aus dem Bohrloch 3 durch die Masse 23 gehalten wird. Die Verankerung des Verstärkungselements 9 in dem Bohrloch 3 ist dadurch zusätzlich erhöht.

Nachfolgend wird diese Verankerung in dem Bereich der Schulter 24 anhand der Detailansicht in Fig. 2 näher erläutert.

Am Übergang des Schneidabschnitts As zu dem Befestigungsabschnitt A_{B} ist an dem Schneidabschnitt As ein konischer Übergangsabschnitt A_{K} angeordnet, der auch als Konusabschnitt bezeichnet wird. In dem Konusabschnitt A_{K} ist der Schneidkopf konisch ausgeführt. Zu dem Befestigungsabschnitt A_{B} hingerichtet ist der Schneidkopf konisch verjüngend ausgeführt, so dass der Durchmesser des Schneidabschnitts A_{S} im Bereich der Schulter 24 kleiner ist als der Schneidabschnittdurchmesser D_{S}. Ein Konuswinkel k des Konusabschnitts ist kleiner als 90° und größer als 0°. Insbesondere ist der Konuswinkel größer als 30°, insbesondere größer als 45° und insbesondere größer als 75°.

Bei der Anordnung 1 sind an der Bohrloch-Innenwand 6 Gewindewendeln 25 durch das Schneidgewinde 15 beim Eindrehen des Verstärkungselements 9 eingeschnitten. Dadurch, dass die Gewindelänge L_{G} kleiner ist als die Bohrlochtiefe T_{B} sind entlang der Bohrloch-Innenwand 6 bei der Anordnung 1 insbesondere mehrere Umläufe der Gewindewendel 25 freiliegend an der Bohrloch-Innenwand 6 angeordnet. Die freiliegende Gewindewendel 25 ist insbesondere dem Befestigungsabschnitt A_{B} in dem Bohrloch 3 zugewandt ausgeführt. Die aushärtbare Masse 23 ist in der Gewindewendel 25 angeordnet und darin ausgehärtet. Dadurch ergibt sich eine Verzahnung der ausgehärteten Masse 23 in dem Bohrloch 3. Die Festigkeit der Anordnung 1 gegen Herausziehen des Verstärkungselements 9 aus dem Bohrloch 3 ist zusätzlich erhöht.

Nachfolgend wird ein Verfahren zum Verstärken des Werkstoffs 2 mittels des Verstärkungselements 9 näher erläutert.

Zunächst wird das Bohrloch 3 gebohrt und anschließend gereinigt. In das gereinigte Bohrloch 3 wird die aushärtbare Masse 23 in einem flüssigen Zustand eingefüllt. Anschließend wird das Verstärkungselement 9, insbesondere mittels eines Werkzeugs, in das Bohrloch 3 eingeschraubt. Mit dem Schneidgewinde 15 schneidet das Verstärkungselement 9 die Gewindewendel 25 die Bohrloch-Innenwand 6. Das Verstärkungselement 9 ist unmittelbar in dem Bohrloch 3 gehalten. Dadurch, dass die Gewindelänge L_{G} klein ist bezogen auf die Gesamtlänge L_{ges} des Verstärkungselements 9 und insbesondere dadurch, dass der Schneidgewindedurchmesser D_{G} nur geringfügig größer ist als der Bohrlochdurchmesser D_{B}, ist das Eindrehdrehmoment reduziert.

Insbesondere ist die Füllmenge der Verbundmasse 23 in dem Bohrloch 3 derart, dass nach Einschrauben des Verstärkungselements 9 in dem Bohrloch 3 die Verbundmasse 23 aus dem Bohrloch 3 an der Oberseite 4 des Werkstoffs 2 austritt. In diesem Zustand ist die Verbundmasse 23 flüssig, insbesondere fließfähig und kann unkompliziert entfernt werden. Anschließend wird das Lastverteilelement 21 auf das Verstärkungselement 9 aufgesetzt und die Befestigungsmutter 22 an dem Verstärkungselement 9 verschraubt und dadurch eine Vorspannung über das Lastverteilelement 21 auf den Werkstoff 2 aufgebracht.

Das Verstärkungselement 9 ist im Bohrlochgrund, also benachbart zu dem Ende der Sacklochbohrung in dem Bohrloch 3 verankert. Ausgehend von dort wird eine Gegenkraft in Folge der Vorspannung in den Werkstoff 2 eingebracht. Auf den Werkstoff 2 wirkt eine Druckspannung. Die in Folge der Vorspannung aufgebrachten Druckkräfte F_{D} sind in Fig. 1 symbolisch dargestellt.

Überraschend wurde gefunden, dass es vorteilhaft ist, wenn das Schneidgewinde 15 derart ausgeführt ist, dass es sich beim Eindrehen in das Bohrloch 3 gezielt abnutzt, also der Schneidgewindedurchmesser D_{G} in Folge des Eindrehvorgangs abnimmt. Dies hat zur Folge, dass eine die Gewindewendel 25 einhüllende Hüllkurve eine bezüglich der Bohrloch-Längsachse 5 orientierte Konusfläche ist, die sich entlang der Einschraubrichtung 14 verjüngt. Der Durchmesser dieser konischen Hüllfläche ist benachbart zum Bohrlochrand, also an der Oberseite 4 des Werkstoffs 2 größer als im Bohrlochgrund. Dieser Hüllkurven-Konuswinkel beträgt insbesondere mindestens 0,05°, insbesondere mindestens 0,1°, insbesondere mindestens 0,2°, insbesondere mindestens 0,5°, insbesondere mindestens 1° und insbesondere höchstens 3°.

Es wurde zusätzlich gefunden, dass aufgrund des Konusabschnitts A_{K} eine in Folge der Vorspannung auf die ausgehärtete Masse 23 wirkende Spreizkraft zumindest anteilig radial ausgerichtet ist, die die Verbundmasse 23 zumindest anteilig bezogen auf die Bohrloch-Längsachse 5 radial nach außen und insbesondere gegen die Bohrloch-Innenwand 6 drückt. Dadurch ergibt sich eine verstärkende Spreizwirkung bezüglich der Verankerung des Verstärkungselements 9 im Bohrloch 3. Diese Spreizwirkung wirkt insbesondere zusätzlich zu dem Formschluss des Schneidkopfs in der ausgehärteten Verbundmasse 23.

Diese konisch aufspreizende Wirkung ist insbesondere entlang der Einschraubrichtung 14 konisch aufweitend ausgeführt. Dies ist insbesondere dann vorteilhaft, wenn in dem Werkstoff 2 ein Querriss 8 vorhanden ist. Durch den Querriss 8 wird das Verstärkungselement 9 in Folge der Druck-Vorspannung quasi in das Bohrloch 3 hineingezogen.

Im Ergebnis wird also mittels des Konusabschnitts eine Lasteinleitung erreicht, die tief im Bohrloch 3 erfolgt. Insbesondere wird dadurch der kleiner werdende Außendurchmesser der Hüllfläche kompensiert, in dem im Bereich des Konusabschnitts A_{K} sich ein wieder aufweitender Konus ergibt. Eine resultierende Kraftwirkungs-Hüllfläche ist bezüglich der Bohrloch-Längsachse 5 doppelt konisch und insbesondere sanduhrartig ausgeführt, mit einem ersten, von der Oberseite 4 des Werkstoffs 2 aus sich erstreckenden, entlang der Einschraubrichtung 14 sich verjüngenden Konusabschnitt und einen sich daran anschließenden zweiten, entlang der Einschraubrichtung 14 aufweitenden Konusabschnitt. Der erste und der zweite Konusabschnitt sind virtuelle Kraftwirkungsbereiche.

## Patentansprüche

1. Verstärkungselement zum Verstärken eines Werkstoffs (2), wobei das Verstärkungselement (9) einen eine Längsachse (13) und einen Kerndurchmesser (D_{K}) aufweisenden Kern (10) umfasst mit
a. einem an einem Einführende (11) des Kerns (10) angeordneten Schneidabschnitt (As), der aufweist
i. eine entlang der Längsachse (13) orientierte Schneidabschnittlänge (Ls),
ii. einen senkrecht zur Längsachse (13) orientierten Schneidabschnittdurchmesser (D_{S}), wobei gilt: D_{S} > D_{K}, sodass der Schneidabschnitt (A_{S}) einen Schneidkopf bildet und das Verstärkungselement (9) einen Hinterschnitt aufweist,
iii. ein Schneidgewinde (15) mit einem Schneidgewindedurchmesser (D_{G}), wobei das Schneidgewinde (15) eine entlang der Längsachse (13) orientierte Gewindelänge (L_{G}) aufweist,
b. einem ein Befestigungsgewinde (19) aufweisenden Befestigungsabschnitt (A_{B}), wobei zwischen dem Schneidabschnitt (As) und dem Befestigungsabschnitt (A_{B}) eine Schulter (24) gebildet ist,
c. einem sich entlang der Längsachse (13) dem Schneidabschnitt (As) anschließenden konischen Übergangsabschnitt (A_{K}) mit einem Konuswinkel (k), wobei gilt: 0° < k < 90°, wobei in dem konischen Übergangsabschnitt (A_{K}) der Schneidkopf zu dem Befestigungsabschnitt (A_{B}) hin gerichtet konisch verjüngend ausgeführt ist, sodass der Durchmesser des Schneidabschnitts (As) im Bereich der Schulter (24) kleiner ist als der Schneidabschnittsdurchmesser (Ds),
d. einem Drehmomentübertragungselement (20).

2. Verstärkungselement gemäß Anspruch 1, **dadurch gekennzeichnet, dass** das Verstärkungselement (9) eine Gesamtlänge (L_{ges}) aufweist, wobei gilt: L_{S} ≤ 0,5 × L_{ges}, insbesondere L_{S} ≤ 0,3 × L_{ges}, insbesondere L_{S} ≤ 0,15 × L_{ges}, insbesondere L_{S} ≤ 0,1 × L_{ges}, insbesondere L_{S} ≤ 0,05 × L_{ges} und insbesondere L_{S} ≥ 0,01 × L_{ges}.

3. Verstärkungselement gemäß einem der vorstehenden Ansprüche, **gekennzeichnet durch** ein an dem Befestigungsgewinde (19) lösbar befestigbares Befestigungselement (22), insbesondere eine Befestigungsmutter.

4. Verstärkungselement gemäß einem der vorstehenden Ansprüche, **gekennzeichnet durch** ein Lastverteilelement (21), insbesondere eine Scheibe, zum Abstützen an einer Oberseite (4) des Werkstoffs (2).

5. Verstärkungselement gemäß einem der vorstehenden Ansprüche, **gekennzeichnet durch** einen Schaftabschnitt, der entlang der Längsachse (13) insbesondere zwischen dem Übergangsabschnitt (A_{K}) und dem Befestigungsabschnitt (A_{B}) angeordnet ist.

6. Anordnung mit
a. einem Werkstoff (2), in dem ein Bohrloch (3) mit einer Bohrlochtiefe (T_{B}) und mit einem Bohrlochdurchmesser (D_{B}) angeordnet ist,
b. einem Verstärkungselement (9) gemäß einem der vorstehenden Ansprüche, das in das Bohrloch (3) eingedreht ist, wobei der Schneidgewindedurchmesser (D_{G}) größer ist als der Bohrlochdurchmesser (D_{B}),
c. einer in dem Bohrloch (3) angeordneten aushärtbaren Masse (23).

7. Anordnung gemäß Anspruch 6, **dadurch gekennzeichnet, dass** gilt: D_{G} ≤ 1,2 × D_{B}, insbesondere D_{G} ≤ 1,15 × D_{B}, insbesondere D_{G} ≤ 1,1 × D_{B}, insbesondere D_{G} ≤ 1,095 × D_{B}, insbesondere D_{G} ≤ 1,07 × D_{B}, insbesondere D_{G} ≤ 1,06 × D_{B} und insbesondere D_{G} ≤ 1,05 × D_{B}.

8. Anordnung gemäß Anspruch 6 oder 7, **dadurch gekennzeichnet, dass** gilt: D_{G} ≤ D_{B} + 1,5 mm, insbesondere D_{G} ≤ D_{B} + 1,25 mm und insbesondere D_{G} ≤ D_{B} + 1 mm.

9. Anordnung gemäß einem der Ansprüche 6 bis 8, **dadurch gekennzeichnet, dass** gilt: L_{S} ≤ 0,5 × T_{B}, insbesondere L_{S} ≤ 0,3 × T_{B}, insbesondere, L_{S} ≤ 0,15 × T_{B}, insbesondere L_{S} ≤ 0,1 × T_{B}, insbesondere L_{S} ≤ 0,05 × T_{B} und insbesondere L_{S} ≤ 0,025 × T_{B}.

10. Anordnung gemäß einem der Ansprüche 6 bis 9, **gekennzeichnet durch** eine an einer Bohrloch-Innenwand (6) von dem Schneidgewinde (15) eingeschnittene Gewindewendel (25), deren Außendurchmesser mit zunehmender Bohrlochtiefe (T_{B}) abnimmt.

11. Anordnung gemäß einem der Ansprüche 6 bis 10, **dadurch gekennzeichnet, dass** das Verstärkungselement (9) mit dem Befestigungsabschnitt (A_{B}) an einer Oberfläche (4) des Werkstoffs (2) entlang der Längsachse (13) vorsteht.

## Claims

1. Reinforcing element for reinforcing a material (2), wherein the reinforcing element (9) comprises a core (10) having a longitudinal axis (13) and a core diameter (D_{K}) with
a. a cutting section (As) arranged at an insertion end (11) of the core (10), which has
i. a cutting section length (Ls) orientated along the longitudinal axis (13),
ii. a cutting section diameter (D_{S}) orientated perpendicular to the longitudinal axis (13), wherein: D_{S} > D_{K}, so that the cutting section (As) forms a cutting head and the reinforcing element (9) has an undercut,
iii. a cutting thread (15) with a cutting thread diameter (D_{G}), wherein the cutting thread (15) has a thread length (L_{G}) orientated along the longitudinal axis (13),
b. a fastening section (A_{B}) having a fastening thread (19), wherein a shoulder (24) is formed between the cutting section (As) and the fastening section (A_{B}),
c. a conical transition section (A_{K}) adjoining the cutting section (As) along the longitudinal axis (13) with a cone angle (k), wherein: 0° < k < 90°, wherein in the conical transition section (A_{K}) the cutting head is conically tapered towards the fastening section (A_{B}), so that the diameter of the cutting section (As) in the region of the shoulder (24) is smaller than the cutting section diameter (Ds),
d. a torque transmission element (20).

2. Reinforcing element according to claim 1, **characterized in that** the reinforcing element (9) has an overall length (L_{ges}), wherein: L_{S} ≤ 0.5 × L_{ges}, in particular L_{S} ≤ 0.3 × L_{ges}, in particular L_{S} ≤ 0.15 × L_{ges}, in particular L_{S} ≤ 0.1 × L_{ges}, in particular L_{S} ≤ 0.05 × L_{ges} and in particular L_{S} ≥ 0.01 × L_{ges}.

3. Reinforcing element according to any one of the preceding claims, **characterized by** a fastening element (22), in particular a fastening nut, which can be detachably fastened to the fastening thread (19).

4. Reinforcing element according to any one of the preceding claims, **characterized by** a load distribution element (21), in particular a disc, for supporting on an upper side (4) of the material (2).

5. Reinforcing element according to any one of the preceding claims, **characterized by** a shaft section which is arranged along the longitudinal axis (13), in particular between the transition section (A_{K}) and the fastening section (A_{B}).

6. Arrangement with
a. a material (2) in which a borehole (3) with a borehole depth (T_{B}) and a borehole diameter (D_{B}) is arranged,
b. a reinforcing element (9) according to any one of the preceding claims, which is screwed into the borehole (3), wherein the cutting thread diameter (D_{G}) is greater than the borehole diameter (D_{B}),
c. a hardenable mass (23) arranged in the borehole (3).

7. Arrangement according to claim 6, **characterized in that** the following applies: D_{G} ≤ 1.2 × D_{B}, in particular D_{G} ≤ 1.15 × D_{B}, in particular D_{G} ≤ 1.1 × D_{B}, in particular D_{G} ≤ 1.095 × D_{B}, in particular D_{G} ≤ 1.07 × D_{B}, in particular D_{G} ≤ 1.06 × D_{B} and in particular D_{G} ≤ 1.05 × D_{B}.

8. Arrangement according to claim 6 or 7, **characterized in that** the following applies: D_{G} ≤ D_{B} + 1.5 mm, in particular D_{G} ≤ D_{B} + 1.25 mm and in particular D_{G} ≤ D_{B} + 1 mm.

9. Arrangement according to any one of claims 6 to 8, **characterized in that** the following applies: L_{S} ≤ 0.5 × T_{B} , in particular L_{S} ≤ 0.3 × T_{B} , in particular L_{S} ≤ 0.15 × T_{B} , in particular L_{S} ≤ 0.1 × T_{B} , in particular L_{S} ≤ 0.05 × T_{B} and in particular L_{S} ≤ 0.025 × T_{B} .

10. Arrangement according to any one of claims 6 to 9, **characterized by** a thread helix (25) cut into a borehole inner wall (6) by the cutting thread (15), the outer diameter of which decreases with increasing borehole depth (T_{B}).

11. Arrangement according to any one of claims 6 to 10, **characterized in that** the reinforcing element (9) projects with the fastening section (A_{B}) on a surface (4) of the material (2) along the longitudinal axis (13).

## Revendications

1. Elément de renforcement destiné au renforcement d'un matériau (2), l'élément de renforcement (9) comprenant un noyau (10) présentant un axe longitudinal (13) et un diamètre de noyau (D_{K}) avec
a. une section de coupe (As) disposée à une extrémité d'introduction (11) du noyau (10), qui comprend
i. une longueur de section de coupe (Ls) orientée le long de l'axe longitudinal (13),
ii. un diamètre de section de coupe (Ds) orienté perpendiculairement à l'axe longitudinal (13), où D_{S} > D_{K}, de sorte que la section de coupe (As) forme une tête de coupe et que l'élément de renforcement (9) présente une contre-dépouille,
iii. un filet de coupe (15) ayant un diamètre de filet de coupe (D_{G}), le filet de coupe (15) ayant une longueur de filet (L_{G}) orientée le long de l'axe longitudinal (13),
b. une section de fixation (A_{B}) présentant un filetage de fixation (19), un épaulement (24) étant formé entre la section de coupe (As) et la section de fixation (A_{B}),
c. une section de transition conique (A_{K}) se raccordant à la section de coupe (As) le long de l'axe longitudinal (13) et présentant un angle de cône (k), où : 0° < k < 90°, la tête de coupe étant réalisée dans la section de transition conique (A_{K}) en se rétrécissant de manière conique en direction de la section de fixation (A_{B}), de sorte que le diamètre de la section de coupe (As) dans la zone de l'épaulement (24) est inférieur au diamètre de la section de coupe (Ds),
d. un élément de transmission de couple (20).

2. Elément de renforcement selon la revendication 1, **caractérisé en ce que** l'élément de renforcement (9) présente une longueur totale (L_{ges}), où L_{S} ≤ 0,5 × L_{ges}, en particulier L_{S} ≤ 0,3 × L_{ges}, en particulier L_{S} ≤ 0,15 × L_{ges}, en particulier L_{S} ≤ 0,1 × L_{ges}, en particulier L_{S} ≤ 0,05 × L_{ges} et en particulier L_{S} ≥ 0,01 × L_{ges}.

3. Elément de renforcement selon l'une quelconque des revendications précédentes, **caractérisé par** un élément de fixation (22) pouvant être fixé de manière amovible sur le filetage de fixation (19), en particulier un écrou de fixation.

4. Elément de renforcement selon l'une quelconque des revendications précédentes, **caractérisé par** un élément de répartition de charge (21), en particulier une rondelle, destiné à prendre appui sur une face supérieure (4) du matériau (2).

5. Elément de renforcement selon l'une quelconque des revendications précédentes, **caractérisé par** une section de tige disposée le long de l'axe longitudinal (13), en particulier entre la section de transition (A_{K}) et la section de fixation (A_{B}).

6. Agencement doté d'
a. un matériau (2), dans lequel est disposé un trou de forage (3) avec une profondeur de trou de forage (T_{B}) et avec un diamètre de trou de forage (D_{B}),
b. un élément de renforcement (9) selon l'une quelconque des revendications précédentes, qui est vissé dans le trou de forage (3), le diamètre du filet de coupe (D_{G}) étant supérieur au diamètre du trou de forage (D_{B}),
c. une masse durcissable (23) disposée dans le trou de forage (3).

7. Agencement selon la revendication 6, **caractérisé en ce que :** D_{G} ≤ 1,2 × D_{B}, en particulier D_{G} ≤ 1,15 × D_{B}, en particulier D_{G} ≤ 1,1 × D_{B}, en particulier D_{G} ≤ 1,095 × D_{B}, en particulier D_{G} ≤ 1,07 × D_{B}, en particulier D_{G} ≤ 1,06 × D_{B} et en particulier D_{G} ≤ 1,05 × D_{B}.

8. Agencement selon la revendication 6 ou 7, **caractérisé en ce que :** D_{G} ≤ D_{B} + 1,5 mm, en particulier D_{G} ≤ D_{B} + 1,25 mm et en particulier D_{G} ≤ D_{B} + 1 mm.

9. Agencement selon l'une quelconque des revendications 6 à 8, **caractérisé en ce que** : L_{S} ≤ 0,5 × T_{B}, en particulier L_{S} ≤ 0,3 × T_{B}, en particulier, L_{S} ≤ 0,15 × T_{B}, en particulier L_{S} ≤ 0,1 × T_{B}, en particulier L_{S} ≤ 0,05 × T_{B} et en particulier L_{S} ≤ 0,025 × T_{B}.

10. Agencement selon l'une quelconque des revendications 6 à 9, **caractérisé par** une hélice filetée (25) découpée sur une paroi intérieure (6) du trou de forage par le filet de coupe (15), dont le diamètre extérieur diminue lorsque la profondeur du trou de forage (T_{B}) augmente.

11. Agencement selon l'une quelconque des revendications 6 à 10, **caractérisé en ce que** l'élément de renforcement (9) fait saillie avec la section de fixation (A_{B}) sur une surface (4) du matériau (2) le long de l'axe longitudinal (13).
